# NOUVEAU FASCICULE DE BREVET EUROPEEN

(11) **EP 0 225 247 B2**
(45) Date de publication et mention de la décision concernant l'opposition: **26.04.1995**
(45) Mention de la délivrance du brevet: 30.05.1990
(21) Numéro de dépôt: 86402546.5
(22) Date de dépôt: 17.11.1986
(51) Int. Cl.: B64D 17/14

(54) **Voilure de parachute**
Fallschirmkappe
Parachute canopy

(30) Priorité: 18.11.1985 FR 8517005
(43) Date de publication de la demande: 10.06.1987
(73) Titulaire: AERAZUR EFA, F-92137 Issy les Moulineaux (FR)
(72) Inventeur: Rives, Jean-François, F-92310 Sevres (FR); Chalon, Jacques, F-75016 Paris (FR); Fugen, Yves, F-78320 Elancourt (FR); Rousseau, Jacques, F-91360 Epinay/Orge (FR)
(74) Mandataire: Rodhain, Claude

(56) Documents cités:
- FR-A- 1 056 062
- FR-A- 1 092 383
- FR-A- 1 418 752
- FR-A- 1 536 477
- FR-A- 2 293 362
- FR-A- 2 408 522
- US-A- 1 194 691
- US-A- 2 703 212
- US-A- 2 764 375
- US-A- 2 929 588
- US-A- 3 393 885
- US-A- 3 469 805
- Technical Report AFFOL-TR-78-151 "Recovery System Design Guide", 1978, Irvin Industries Inc., Gardena, California US, pages V, VI, 14,57,58,90,109,110,249 and 250

## Description

La présente invention concerne les voilures de parachute à vitesse d'ouverture rapide et à sécurité positive à l'ouverture constituée d'un ensemble de fuseaux.

Dans les années récentes, de nombreux perfectionnements ont été;apportés aux voilures de parachute, ces perfectionnements étant destinés à améliorer la manoeuvrabilité du parachute et la simplicité de manipulation des moyens de commande, comme par exemple l'aménagement de fenêtres de manoeuvre et de dispositifs de commande de manoeuvre adéquats.

Ces perfectionnements ont grandement amélioré la sécurité du vol en descente et del'atterrissage n parachute. Il n'en est pas moins qu'un moment reste très délicat, il s'agit du moment de l'ouverture du parachute.

Le mode d'ouverture des parachutes hémisphériques que l'on connaît se fait par remplissage de la coupole par de l'air entrant dévié par le bord d'attaque de la voilure, cet air allant gonfler tout d'abord la partie supérieure de la voilure, puis sa partie centrale et enfin la partie voisine de son bord d'attaque. Des problèmes peuvent se présenter à plusieurs stades de ce gonflement. Premièrement lors de l'écartement du bord d'attaque de la voilure, du fait de la vitesse relative par rapport à l'air, les efforts dus à la pression qu'exerce cet air sur les bords d'attaque sont très grands et très aléatoires, ce qui provoque en général un mouvement de flottement du bord d'attaque durant lequel ce dernier a tendance à s'écarter et à se refermer violemment. Il est très important que cette période de flottement soit limitée dans le temps et qu'elle se concrétise par un écartement complet. Deuxièmement, lorsque les bords d'attaque se sont écartés et que le gonflement de la voilure a commencé, ce sont des problèmes de fonctionnement qui peuvent apparaître. Les deux types principaux de non-fonctionnement connus sont d'une part le phénomène de constitution de double coupole ou inversion partielle et d'autre part la forme fusante qui peut se produire à haute vitesse alors que la voilure n'est pas complètement gonflée et qu'il se produit un équilibre entre les pressions internes et externes de part et d'autre de la voilure, celle-ci conservant alors une forme de poire.

Le brevet francçais No 1.418,752 prévoit en plus de la cheminée centrale, des tuyères disposées dans la partie supérieure. Le but recherché est la diminution du choc à l'ouverture et l'augmentation de la stabilité de la voilure. Parallèlement ces résultats. conduisent à une amélioration de la sécurité à l'ouverture, car l'air pénétrant à contrecourant gonfle le haut de la coupole et brise l'équilibre entre les pressions internes et externes, assurant un gonflement total. Une telle conception n'augmente par contre pas la vitesse de déploiement, laisse subsister le flottement du bord d'attaque et s'attache plus particulièrement au freinage de la descente avant ouverture totale de la voilure.

On connaît aussi le brevet américain No. 2.929.588 qui propose de disposer régulièrement sur l'ensemble de la voilure des fentes entre des panneaux trapézoïdaux découpés de façon à ce que la coupole présente, une fois gonflée, une forme hémisphérique parfaite plutôt qu'une forme ovoïde et aplatie. De telles voilures permettent également de diminuer le choc à l'ouverture, ce qui est un des buts principaux de ce brevet et de conférer à l'ensemble une tendance positive à l'ouverture, mais ce type de voilure ne privilégie pas l'écartement du bord d'attaque, puisque l'air peut passer à travers toutes les fentes simultanément et indifféremment. D'autre part, le gros inconvénient provient de ces fentes elles-mêmes, dont les bords sont juxtaposés et qui ne présentent aucun effet directionnel des filets d'air.

Le brevet américain No. 3.393.885 prévoit un dispositif permettant de régulariser l'écoulement à travers des tuyères du type de celles décrites dans le brevet français précédemment cité. A cet effet, des brides régulièrement réparties et de longueur strictement identique, relient le bord supérieur de la tuyère à la voilure proprement dite plus exactement au fuseau qui supporte cette même tuyère. Le débit d'air s'effectue alors à travers une ouverture rectangulaire et non plus à travers une ouverture en forme de croissant. Il n'y a donc plus de vitesse différentielle et le type d'écoulement se rapproche du modèle d'un écoulement laminaire. Ces tuyères ont un effet certain dans la phase après l'ouverture et durant l'ouverture ces brides empêchent également toute inversion, mais il n'y a aucune incidence sur la vitesse d'ouverture ou sur la sécurité positive à l'ouverture.

Le but de la présente invention est de remédier aux problèmes énoncés ci-dessus concernant l'ouverture du parachute et de proposer des voilures dont la vitesse d'ouverture est très rapide, ce qui permet des sauts et des largages de charges à basse altitude.

Dans l'ensemble du texte qui va suivre "entrée d'air" est utilisé pour désigner un volume dans lequel l'air en se comprimant (RAM AIR) effectue un travail positif sur l'ouverture de la voilure. Ce terme "entrée d'air" ne doit pas être pris au seul sens courant de section de passage d'air.

La voilure de parachute selon l'invention se caractérise en ce que plusieurs fuseaux délimités par des méridiens comportent une fente , ladite fente définissant ainsi une première et une deuxième portions de ce même fuseau, ainsi qu'une écope constituée d'une bande de tissu surmontant la fente et rendue solidaire du fuseau sur le bord supérieur de celle-ci, sur toute la largeur du bord et d'un méridien à l'autre, ainsi que desdits méridiens le long de ceux-ci en direction du bord d'attaque de la coupole constituant la voilure , de manière à produire une entrée d'air définissant un volume compris entre une région d'entrée , et une région de sortie constituée par ladite fente , ladite entrée d'air étant située exclusivement dans la partie inférieure de la coupole au voisinage du bord d'attaque de la coupole, la section de la région de sortie étant inférieure à celle de la région d'entrée de façon à faire gonfler l'entrée d'air en freinant le flux d'air qui la traverse.

Selon une autre caractéristique de l'invention, on prévoit au moins une bride reliant la surface externe de l'entrée d'air au haut de la surface recouverte du fuseau concerné par ladite entrée d'air de façon à diminuer la section de sortie d'air vers l'intérieur de la voilure sans diminuer la section d'entrée de cette entrée d'air (RAM AIR).

Selon l'invention, la surface externe de l'entrée d'air peut être constituée d'une bande de tissu chevauchant deux fuseaux, au moins une bride étant alors disposée à la partie arrière de l'entrée `d'air pour chacun des fuseaux.

La présence d'entrée d'air au dessus du bord permet au gonflement de débuter dès que cette partie de la voilure a quitté le sac de déploiement. Le bord d'attaque sous l'effet des flux d'air entrant par les entrées d'air, provoque l'écartement complet de tout l'ensemble de la voilure. La tendance au flottement est supprimée et l'ouverture est quasi-immédiate. La constitution de double coupole ou l'apparition d'une forme fusante sont ainsi évitées.

L'invention sera mieux comprise à l'aide de la description qui va suivre, donnée à titre d'exemple non limitatif et qui se réfère aux dessins annexés sur lesquels:
La figure 1 est une vue partielle schématique en perspective, d'une première forme d'exécud'une entrée d'air selon l'invention;
La figure 2 est une vue partielle schématique en perspective d'une deuxième forme d'exécution de la voilure selon l'invention;
Les figures 4 et 5 sont respectivement des vues en perspective et en coupe longitudinale d'un fuseau pour voilure non munie d'entrée d'air.
Les figures 7a, 7b et 7c sont respectivement des vues en perspective et en coupe d'une autre variante de fuseau pour voilure selon l'invention;
Les figures 8a, 8b, 8c et 8d sont respectivement des vues en perspective et en coupe d'une autre variante de fuseau pour voilure selon l'invention;
Les figures 9a à 9e montrent de façon schématique les étapes de l'ouverture d'un parachute hémisphérique de l'art antérieur;
Les figures 10a à 10e montrent d'une façon schématique, les étapes de l'ouverture d'un parachute hémisphérique dont la voilure est équipée d'entrées d'air selon l'invention.

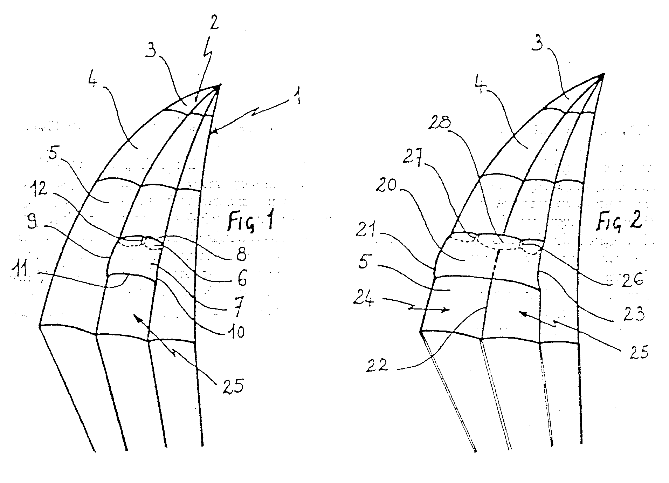

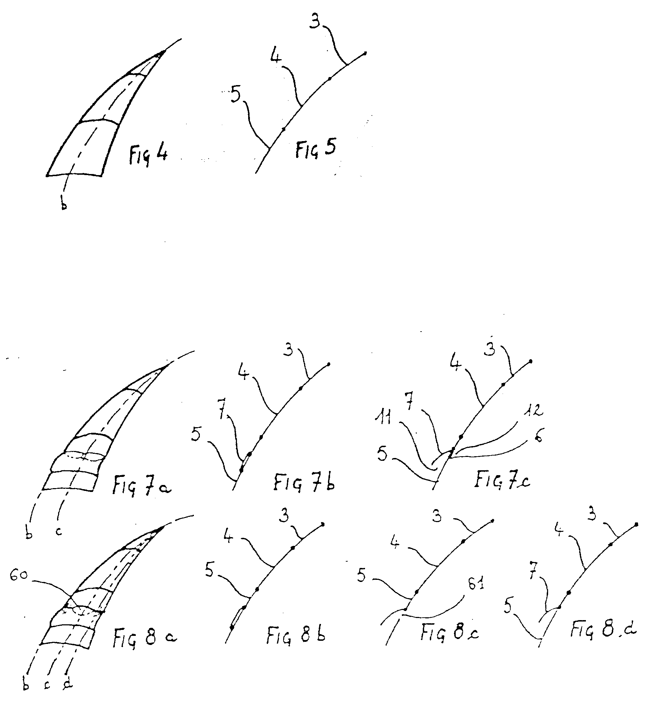

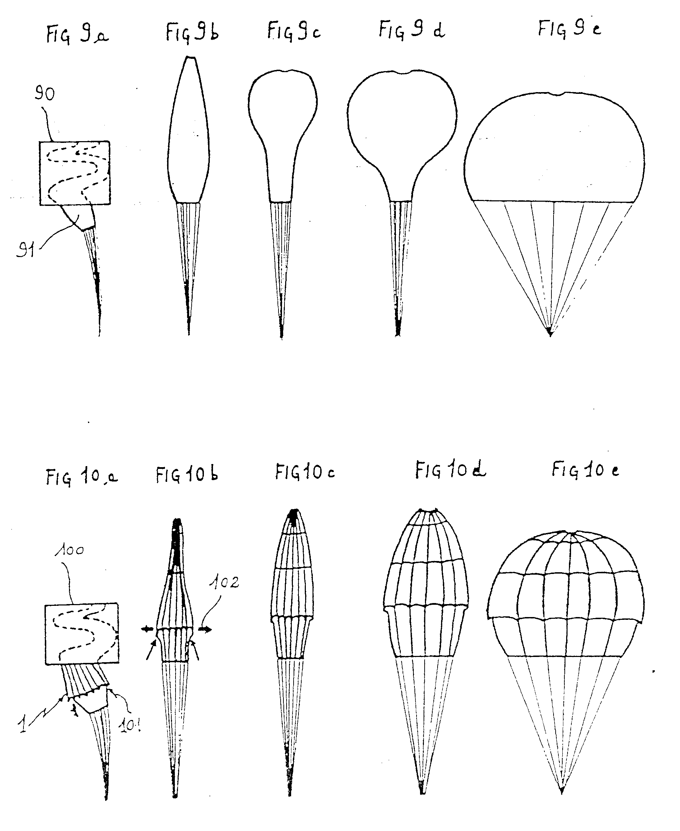

La voilure 1 pour parachute représentée sur la figure 1 est constituée par un ensemble de fuseaux 2 de forme essentiellement triangulaire, chaque fuseau étant constitué de trois panneaux 3, 4 et 5. Ces panneaux d'un même fuseau sont cousus bout à bout. Un certain nombre de panneaux répartis sur le pourtour de la voilure, comportent une entrée d'air sous la forme d'une fente 6 aménagée dans le panneau inférieur 5 et surmontée d'une écope constituée par une bande de tissu 7, cousu au bord supérieur 8 de la fente, ainsi que le long des méridiens en 9 et 10. Le côté libre 11 constituant alors l'entrée de l'entrée d'air. Sur cette même figure 1 on a représenté en pointillé le bord inférieur de la fente 6, qui est relié au bord supérieur de cette même fente par une bride 12. Cette bride 12 travail le dans le plan de la voilure et a pour but de diminuer l'écartement entre les bords supérieur et inférieur de la fente de façon à faire gonfler l'entrée d'air en freinant le flux d'air qui la traverse, ce freinage étant obtenu par diminution de la section de sortie de l'entrée d'air sans diminution de la section d'entrée de l'entrée d'air (RAM AIR).

De telles entrées d'air permettent à l'air de pénétrer à l'intérieur de la voilure dès que cellesci ont quitté le sac de déploiement. Le gonflement du parachute débute donc immédiatement, la partie inférieure de la voilure s'écartant sous l'effet des flux d'air, ce qui assure l'écartement des bords d'attaque de la voilure en éliminant les flottements.

La voilure représentée à la figure 2 montre une écope située sur deux fuseaux adjacents, la bande 20 est en continu sur les deux écopes, les deux extrémités de' cette bande étant cousues aux deux méridiens 21 et 23 situés de part et d'autre des deux fuseaux fendus 24 et 25, deux brides 26 et 27 sont alors fixées entre le bord supérieur et le bord inférieur de la fente 28. Dans une autre forme d'exécution de cette variante, la bande 20 peut être cousue en son milieu et elle se retrouve liée au méridien 22. Selon d'autres formes d'exécution de la voilure représentée à la figure 2, une pluralité d'écopes sont réparties sur le pourtour de la voilure, des entrées d'air pouvant être prévues sur des fuseaux isolés ou sur plusieurs fuseaux contigus, la bande 20 pouvant être continue sur tout ou partie du pourtour de la voilure et cousue sur la voilure le long de chaque méridien ou le long d'un certain nombre déterminé de méridiens seulement chaque écope pouvant être munie ou non d'une ou plusieurs brides.

La figure 4 montre les trois panneaux d'un fuseau non-muni d'entrée d'air selon l'invention. La coupe selon la ligne b est représentée sur la figure 5, sur laquelle on voit les trois panneaux 3, 4 et 5 cousus bout à bout.

La figure 6a représente un fuseau muni d'une entrée d'air selon l'invention dans sa variante par recouvrement du panneau inférieur 5 par le panneau médian 4, lorsqu'une bride 31 est interposée entre l'extrémité supérieure du panneau inférieur et la surface du panneau médian. La coupe selon la ligne b représentée sur la figure 6b montre bien le chevauchement. La bride 31 travaille dans un plan essentiellement perpendiculaire au plan de la voilure, ce que l'on constate sur la figure 6c qui est une représentation en coupe du fuseau de la figure 6a selon la ligne c.

La figure 7a représente un fuseau muni d'une entrée d'air selon l'invention dans sa variante écope et sur la coupe selon la ligne b représentée sur la figure 7b on distingue bien la bande de tissu 7. La figure 7c représente une coupe de la figure 7a selon la ligne c et l'on distingue alors l'entrée 11 de l'entrée d'air et la bride 12 reliant la partie inférieure de la fente 6 à la partie supérieure, la bride 12 travaillant dans le plan de la voilure.

La figure 8a représente une variante de la figure 7a selon laquelle on réalise la diminution de la section de sortie de l'entrée d'air sans diminuer la section d'entrée de l'entrée d'air en cousant partiellement les bords latéraux de la fente 60.

La figure 8b représente une coupe selon la ligne b de la figure 8a sur laquelle on distingue bien la bande 7. Sur la figure 8c qui est une coupe selon la ligne c, on distingue bien la sortie d'air 61 de l'entrée d'air. Si l'on s'attache à la coupe 8d selon la ligne d, on constate que les deux bords de la fente 60 sont liés ensemble par couture.

L'invention a été décrite pour des voilures de construction droite. Il est entendu que ces entrées d'air peuvent être aussi aménagées sur des voilures construites en biais. Les voilures décrites plus haut comportent des panneaux cousus constituant les fuseaux, mais tout autre mode de liaison des panneaux reste possible. Un changement de forme des panneaux, mais qui utiliserait des entrées d'air selon l'invention resterait compris dans cette même invention.

On a montré sur les figures 9a à 9e de façon schématique l'évolution du comportement de la voilure d'un parachute hémisphérique classique en représentant le parachute à cinq moments caractéristiques de son ouverture. La figure 9a représente un sac de déploiement 90 duquel s'extrait une voilure de parachute 91 selon l'art antérieur. Sur la figure 9b on constate que la voilure prend une forme ovoïde très allongée et que l'air pénétrant par la partie inférieure a tendance à gonfler la partie supérieure pour lui donner une première forme de poire représentée sur la figure 9c qui va en s'accentuant, ce que l'on constate sur la figure 9d, pour obtenir l'ouverture complète du parachute à la figure 9e. Les figures 10a à 10e montrent le déploiement d'une voilure de parachute selon l'invention munie de ses entrées d'air. Du sac de déploiement 100 s'extrait la voilure 1, munie de ses entrées d'air selon l'une quelconque des variantes de l'invention et l'on a représenté par les flèches 101 la pénétration de l'air dans la voilure dans sa partie inférieure dès que cette partie inférieure quitte le sac de deploiement. Sur la figure 10b les flèches 102 montrent l'effort résultant des entrées d'air qui conduisent à écarter les bords d'attaque dans la partie inférieure de la voilure. Cette même partie inférieure a tendance à s'écarter avant la partie supérieure, comme le montrent les figures 10c et 10d pour obtenir un déploiement complet à la figure 10e. Ces deux synoptiques de fonctionnement montrent bien la différence importante sur l'écartement du bord d'attaque de la voilure dû à la présence des'entrées d'air sur le synoptique de fonctionnement de la voilure équipé d'entrée d'air selon l'invention.

On peut avantageusement réaliser des voilures de parachutes comportant d'une part les entrées d'air aménagées selon l'invention et d'autre part des fenêtres de manoeuvre connues par ailleurs. La présente invention n'est pas limitée aux exemples de réalisation et aux applications qui viennent d'être décrits. On peut citer à cet égard l'application d'une telle voilure à vitesse d'ouverture rapide pour le freinage des avions à l'atterrissage ou le freinage précoce de munitions larguées par avion.

## Revendications

1. Voilure de parachute à vitesse d'ouverture rapide et à sécurité positive présentment une coupole comportant un ensemble de fuseaux (24,25), caractérisée en ce que plusieurs fuseaux (25) délimités par des méridiens (9, 10) comportent une fente (6), ladite fente (6) definissant ainsi une première et une deuxième portion de ce même fuseau, ainsi qu'une écope constituée d'une bande de tissu surmontant la fente (6), et rendue solidaire du fuseau (25) sur le bord supérieur de celle-ci, sur toute la largeur du bord et d'un méridien à l'autre, ainsi que desdits méridiens (21, 23) le long de ceux-ci en direction du bord d'attaque de la coupole constituant la voilure (2), de manière à produire une entrée d'air définissant un volume compris entre une region d'entrée (11), et une région de sortie constituée par ladite fente (6), ladite entée d'air étant située exclusivement dans la partie inférieure de la coupole au voisinage du bord d'attaque de la coupole, la section de la région de sorte (6) étant inférieure à celle de la région d'entrée (11) de façon à faire gonfler l'entrée d'air en freinant le flux d'air qui la traverse.

2. Voilure de parachute selon la revendication 1, caractérisée en ce que les extrémités latérales (9 et 10) de la bande (7) sont rendues solidaires de deux méridiens qui définissent le fuseau dans lequel l'écope est aménagée.

3. Voilure de parachute selon la revendication 1, caractérisée en ce qu'au moins une bride (12) relie le bord supérieur au bord inférieur de la fente.

4. Voilure de parachute selon la revendication 1, caractérisée en ce qu'elle comprend au moins une écope aménagée dans au moins deux fuseaux adjacents (24 et 25) et en ce que la bande (20) est rendue solidaire des deux méridiens (21 et 23) situés de part et d'autre des deux fuseaux adjacents (24 et 25).

5. Voilure de parachute selon l'une quelconque des revendications précédentes, caractérisée en ce qu'elle comporte en outre au moins une fenêtre de manoeuvre pourvue d'au moins un moyen de commande de manoeuvre.

6. Application de la voilure de parachute selon l'une quelconque des revendications précédentes au saut en parachute à basse altitude.

7. Application de la voilure de parachute selon l'une quelconque des revendications 1 à 6 au largage de charges à basse altitude.

## Claims

1. Parachute canopy with rapid opening speed and fail-safe system, having a cap comprising a set of gores (24,25), characterised by the fact that a number of gores (25), delimited by meridian lines (9,10) comprise a slit (6), the said slit (6) thus defining a first and a second portion of this same gore, as well as a compartment formed by a band of fabric surmounting the slit (6) and made integral with the gore (25) on the upper edge of the said slit, over the entire width of the edge and from one meridian line to the other, as well as the said meridian lines (21,23) along these latter in the direction of the leading edge of the cap constituting the canopy (2), in such a way as to produce an air inlet defining a volume included between an entry region (11) and an outlet region formed by the said slit (6), the said air inlet being situated exclusively in the lower part of the cap, in the vicinity of the leading edge of the cap, the cross section of the outlet region (6) being smaller than that of the inlet region (11), in such a way as to increase the entry of air while braking the flow of air which passes through it.

2. Parachute canopy in accordance with Claim 1, characterised by the fact that the side edges (9 and 10) of the band (7) are made integral with two meridian lines which define the gore in which the compartment is provided.

3. Parachute canopy in accordance with Claim 1, characterised by the fact that at least one strap (12) connects the upper edge to the lower edge of the slit.

4. Parachute canopy in accordance with Claim 1, characterised by the fact that it comprises at least one compartment provided in at least two adjacent gores (24,25) and that the band (20) is made integral with the two meridian lines (21 and 23) situated on each side of both adjacent goes (24 and 25).

5. Parachute canopy in accordance with any one of the foregoing claims, characterised by the fact that it also comprises at least one operating window provided with at least one operating drive means.

6. Application of the parachute canopy, according to any one of the foregoing claims, to low-altitude parachute jumping.

7. Application of the parachute canopy, according to any one of Claims 1-6, to low-altitude load dropping.

## Patentansprüche

1. Schnell und zwangsläufig öffnende Fallschirmkappe mit einem Schirm aus Bahnen (24, 25),
**dadurch gekennzeichnet, daß**
mehrere Bahnen (25), die durch Meridiane (9,10) begrenzt sind, einen Schlitz (6) aufweisen, der so einen ersten und einen zweiten Teil derselben Bahn bildet, ebenso wie eine Tasche, die aus einem Gewebeband besteht, das über dem Schlitz (6) liegt und mit der Bahn (25) über dessen oberen Rand über die Breite des Randes und von einem Meridian zum andern ebenso wie längs der Meridiane (21,23) in Richtung des Angriffsrandes, der den Schirm (2) bildenden Kappe derart verbunden ist, daß ein Lufteintritt gebildet wird, der ein Volumen begrenzt, das zwischen einem Eintrittsbereich (11) und einem Austrittsbereich eingeschlossen ist, der aus dem Schlitz besteht, wobei der Lufteintritt ausschließlich im unteren Teil des Schirms nahe dem Angriffsrand des Schirms liegt, und der Querschnitt des Austrittsbereichs (6) kleiner als der des Eintrittsbereichs (11) ist, um den Lufteintritt aufzublasen und den ihn durchsetzenden Luftstrom zu bremsen.

2. Fallschirmkappe nach Anspruch 1,
**dadurch gekennzeichnet, daß**
die seitlichen Enden (9,10) des Bandes (7) mit zwei Meridianen verbunden sind, die die Bahn begrenzen, in der die Tasche ausgebildet ist.

3. Fallschirmkappe nach Anspruch 1,
**dadurch gekennzeichnet, daß**
wenigstens ein Gurt (12) den oberen Rand des Schlitzes mit dessen unterem Rand verbindet.

4. Fallschirmkappe nach Anspruch 1,
wenigstens eine Tasche in wenigstens zwei benachbarten Bahnen (24 und 25) ausgebildet ist, und daß das Band (20) mit zwei Meridianen (21 UND 23) verbunden sind, die auf beiden Seiten der beiden benachbarten Bahnen (24 und 25) liegen.

5. Fallschirmkappe nach einem der vorhergehenden Ansprüche, **gekennzeichnet durch**
wenigstens ein Steuerfenster mit wenigstens einer Steuereinrichtung.

6. Verwendung der Fallschirmkappe nach einem der vorhergehenden Ansprüche beim Fallschirmabsprung aus geringer Höhe.

7. Verwendung der Fallschirmkappe nach einem der Ansprüche 1 bis 6 beim Lastenabwurf aus geringer Höhe.
